# EUROPÄISCHE PATENTSCHRIFT

(11) **EP 1 660 360 B1**
(45) Veröffentlichungstag und Bekanntmachung des Hinweises auf die Patenterteilung: **13.12.2006**
(21) Anmeldenummer: 04764378.8
(22) Anmeldetag: 23.08.2004
(51) Int. Cl.: B60S 1/08

(54) **VERFAHREN ZUM BETREIBEN EINER SENSORVORRICHTUNG ZUR DETEKTION VON STÖREINFLÜSSEN AUF DER AUSSENSEITE EINES OPTISCH DURCHLÄSSIGEN KÖRPERS**
METHOD FOR OPERATING A SENSOR DEVICE FOR DETECTING INTERFERENCE ON THE OUTSIDE OF AN OPTICALLY-TRANSPARENT BODY
PROCEDE DE FONCTIONNEMENT D'UN DISPOSITIF DE DETECTION DESTINE A DETECTER DES INFLUENCES PERTURBATRICES SUR LA FACE EXTERIEURE D'UN CORPS OPTIQUEMENT TRANSPARENT

(30) Priorität: 04.09.2003 DE 10340702
(43) Veröffentlichungstag der Anmeldung: 31.05.2006
(73) Patentinhaber: Valeo Schalter und Sensoren GmbH, 74321 Bietigheim-Bissingen (DE)
(72) Erfinder: SCHULER, Thomas, 75446 Wiernsheim (DE); SCHUHMACHER, Tobias, 71665 Vaihingen-Horrheim (DE)
(74) Vertreter: Bulling, Alexander
(86) Internationale Anmeldenummer: PCT/EP2004/009397
(87) Internationale Veröffentlichungsnummer: WO 2005/028266

(56) Entgegenhaltungen:
- EP-A- 1 113 260
- DE-A- 10 117 397
- US-B1- 6 373 215

## Beschreibung

Die Erfindung betrifft ein Verfahren zum Betreiben einer Sensorvorrichtung zur Detektion von Störeinflüssen auf einer Außenseite eines optisch durchlässigen Körpers. Darüber hinaus betrifft die Erfindung ein Computerprogramm (eine Software) und eine Sensorvorrichtung zur Durchführung dieses Verfahrens. Bevorzugtes Anwendungsgebiet für die Erfindung ist der Bereich Kraftfahrzeuge, insbesondere Kraftfahrzeugelektronik; eine Anwendung der Erfindung ist jedoch auch in den Bereichen Unterhaltungs- und Konsumelektronik, Datenverarbeitung, Kommunikation oder Industrieelektronik denkbar.

Berührungslose induktive, kapazitive aber auch optische Schalter sind grundsätzlich im Stand der Technik bekannt.

Darüber hinaus sind Verfahren und Sensorvorrichtungen der beschriebenen Art zur Detektion von Störeinflüssen auf einer Außenseite eines optisch durchlässigen Körpers, zum Beispiel aus der DE 10 117 397 A1, bekannt. Die dort offenbarte Sensorvorrichtung ist auf der Innenseite eines optisch durchlässigen Körpers, insbesondere einer Windschutzscheibe eines Kraftfahrzeugs, angeordnet. Sie umfasst mindestens ein optisches Empfangselement sowie zwei optische Sendezweige, jeweils zum Aussenden von Licht. Der erste Sendezweig enthält nur sogenannte R-Typ-Sendeelemente (R: Regen), welche vorzugsweise als Leuchtdioden ausgebildet sind. Diese R-Typ-Sendeelemente sind so ausgerichtet, dass ein Großteil der von ihnen ausgesandten optischen Strahlen ohne Feuchtigkeitstropfen an der Außenseite des optisch durchlässigen Körpers auf das Empfangselement total reflektiert werden. In einem zweiten Sendezweig ist zumindest ein sogenanntes S-Typ-Sendeelement (S: Schmutz) vorgesehen, welches so ausgerichtet ist, dass ein Großteil der von ihm ausgesandten optischen Strahlen beim Auftreffen auf Schmutzpartikel auf der Außenseite oder auf einen anderen nicht-transparenten, körperlichen Gegenstand beabstandet zu der Außenseite des optisch durchlässigen Körpers, zumindest teilweise an dem nicht-transparenten, körperlichen Gegenstand gestreut und auf das Empfangselement zurückreflektiert werden. In dem zweiten Sendezweig ist neben dem S-Typ-Sendeelement noch mindestens ein R-Typ-Sendeelement aktiviert.

In der soeben beschriebenen, bekannten Sensorvorrichtung werden die beiden Sendezweige abwechselnd betrieben. Wenn der erste Sendezweig betrieben wird, das heißt wenn dessen Sendeelemente Licht aussenden, und der zweite Sendezweig gleichzeitig deaktiviert ist, dann wird die von dem Empfangselement empfangene Lichtleistung in Form eines ersten Signals erfasst. Gleichermaßen wird dann, wenn der zweite Sendezweig aktiviert und der erste Sendezweig deaktiviert ist, die Leistung des von dem Empfangselement empfangenen Lichtes in Form eines zweiten Signals erfasst. Die beiden empfangenen Lichtleistungen werden dann vorzugsweise durch Differenzbildung miteinander verglichen.

Es wird ein Regelsignal gebildet, welches die Differenz der von den beiden Sendezweigen empfangenen Lichtleistung repräsentiert. Nach Maßgabe durch dieses Regelsignal wird die Sendeleistung der Sendeelemente in demjenigen Sendezweig bei dessen nachfolgender Aktivierung angehoben, dessen empfangene Lichtleistung geringer war im Vergleich zu der von dem anderen Sendezweig empfangenen Lichtleistung.

Für den Fall, dass die Differenz der empfangenen Lichtleistungen der beiden Sendezweige einen vorgegebenen Schwellenwert überschreitet, ist ein Wischen der Außenseite des optisch durchlässigen Körpers vorgesehen. Es ist in diesem Fall jedoch ausdrücklich kein Waschen, das heißt keine zusätzliche Befeuchtung der Außenseite vorgesehen, weil davon ausgegangen wird, dass die festgestellte Differenz zwischen den empfangenen Lichtleistungen aufgrund von Feuchtigkeitstropfen, das heißt insbesondere durch Regentropfen, verursacht wurde; die Außenseite des optisch durchlässigen Körpers ist dann aufgrund der Feuchtigkeitstropfen schon ausreichend nass und bedarf deshalb keiner zusätzlichen künstlichen Befeuchtung.

Ausgehend von diesem Stand der Technik ist es die Aufgabe der Erfindung, ein bekanntes Verfahren zum Betreiben einer Sensorvorrichtung, ein Computerprogramm zur Durchführung des Verfahrens sowie die bekannte Sensorvorrichtung selber dahingehend weiterzubilden, dass eine Schaltfunktion ausgelöst wird, wenn sich ein zumindest teilweise nicht-transparenter körperlicher Gegenstand auf der Außenseite oder beabstandet zu der Außenseite des optisch durchlässigen Körpers im Detektionsbereich der Sensorvorrichtung bewegt.

Diese Aufgabe wird durch das im Patentanspruch 1 beanspruchte Verfahren gelöst. Dieses zeichnet sich dadurch aus, dass eine Schaltfunktion dann ausgelöst wird, wenn das Differenzsignal mindestens eine charakteristische Differenzsignalausprägung in Form von einer vorbestimmten Anzahl von aufeinander folgenden Extremwerten innerhalb eines vorgegebenen Beobachtungszeitfensters aufweist, und wenn das Regelsignal im Wesentlichen zu Beginn und am Ende des Beobachtungszeitfensters zumindest näherungsweise denselben Betragswert aufweist.

Durch die Realisierung des erfindungsgemäßen Verfahrens wird vorteilhafterweise eine Schaltfunktion dann ausgelöst, wenn sich ein zumindest teilweise nicht-transparenter körperlicher Gegenstand auf der Außenseite des optisch durchlässigen Körpers oder beabstandet zu dieser Außenseite im Detektionsbereich der Sensorvorrichtung bewegt. Durch diese Bewegung wird die charakteristische Differenzsignalausprägung in dem Differenzsignal, welches die Differenz der Empfangsleistungen bei getrennter Aktivierung der beiden Sendezweige repräsentiert, induziert. Ein Erfassen und Auswerten dieser induzierten Differenzsignalausprägung sowie des dieser Differenzsignalausprägung zugeordneten Verlaufs des Regelsignals lässt sich auf die stattgefundene Bewegung des körperlichen Gegenstands rückschließen. Bei Erkennen dieser Bewegung wird dann die Schaltfunktion ausgelöst.

Für die Realisierung der Schaltfunktion bei der grundsätzlich bekannten optischen Sensorvorrichtung ist keine Änderung der Hardware erforderlich. Die Schaltfunktion kann alleine durch eine Erweiterung von dessen Software und damit kostengünstig realisiert werden.

Die Sensorvorrichtung basiert auf dem grundsätzlich bekannten High-Ambient-Light-Independent-System HALIOS-Prinzip. Ihr Funktionsprinzip im Allgemeinen und insbesondere das Auslösen der Schaltfunktion ist deshalb unabhängig von dem jeweils aktuellen Umgebungslicht, beziehungsweise dessen Veränderung, oder sonstigen optischen Fremdeinflüssen. Außerdem können Alterungseffekte der Sendeelemente, das heißt vorzugsweise von Dioden, vernachlässigt werden, weil diese aufgrund des differenziellen Messverfahrens eliminiert werden. Auch Kratzer in dem optisch durchlässigen Körper gefährden die Schaltfunktion als solche nicht; sie führen lediglich zu einer gleichmäßigen Anhebung des Regelsignals, lassen aber die zur Auslösung der Schaltfunktion notwendige charakteristische Differenzsignalausprägung unberührt.

Es sei an dieser Stelle hervorgehoben, dass für das Auslösen der Schaltfunktion sowohl das Differenzsignal wie auch das Regelsignal gleichermaßen ausgewertet werden müssen. Eine alleinige Auswertung des Differenzsignals im Hinblick auf die charakteristische Differenzsignalausprägung ohne die zusätzliche Auswertung des Regelsignals ist nicht ausreichend, weil sich bei Vorhandensein von Feuchtigkeitstropfen auf der Außenseite des optisch durchlässigen Körpers eventuell eine ähnliche Differenzsignalausprägung einstellen kann. Gleichermaßen ist die alleinige Auswertung des Regelsignals nicht ausreichend, weil sich ein ähnliches Regelsignal auch bei Vorhandensein von Feuchtigkeitstropfen und/oder Staub auf der Außenseite des optisch durchlässigen Körpers einstellen kann, wenn diese später weggewischt werden. Erst durch die beanspruchte Auswertung beider Signale, das heißt sowohl des Differenzsignals wie auch des Regelsignals, ist eine eindeutige Unterscheidung zwischen einer Bewegung des nicht-transparenten körperlichen Gegenstandes, der das Auslösen der Schaltfunktion bewirken soll, und dem Vorhandensein von Feuchtigkeitstropfen oder Schmutzpartikeln im Detektionsbereich der Sensorvorrichtung möglich. Die Erkennung dieser Bewegung, das heißt die Erkennung des Wunsches einer Person zum Auslösen der Schaltfunktion ist bei Auswertung der beiden Signale selbst dann möglich, wenn die Außenseite des optisch durchlässigen Körpers verschmutzt und/oder nass ist. Selbstverständlich darf die Außenseite jedoch nur insoweit leicht verschmutzt sein, als dass noch ein Austreten der von den S-Typ-Sendeelementen ausgesandten optischen Strahlen in den Bereich vor der Außenseite des optisch durchlässigen Körpers möglich ist.

Um sicher zu stellen, dass mit der detektierten Bewegung des nicht transparenten optischen Körpers auch tatsächlich ein Auslösen der Schaltfunktion gewünscht ist, und die Bewegung nicht missinterpretiert wird, werden erfindungsgemäß verschiedene Zusatzkriterien vorgesehen, welche zusätzlich neben den in Patentanspruch 1 beanspruchten Kriterien wahlweise erfüllt sein müssen, damit die Schaltfunktion ausgelöst.wird. Beispiele für derartige Kriterien sind in den Unteransprüchen beschrieben.

Weiterhin ist in den Unteransprüchen eine bevorzugte Ausführungsform zur Durchführung des Verfahrens beschrieben. Diese sieht vor, dass die erfindungsgemäße Sensorvorrichtung auf der Innenseite einer Heckscheibe eines Kraftfahrzeugs mit Heckklappe angeordnet ist. Die Heckscheibe fungiert dann als optisch durchlässiger Körper im Sinne der Erfindung. Die Schaltfunktion kann dann erfindungsgemäß zum Beispiel dadurch ausgelöst werden, dass eine Person ihre Hand zweimal durch den Detektionsbereich der Sensorvorrichtung bewegt.

Die oben genannte Aufgabe der Erfindung wird weiterhin durch ein Computerprogramm mit Programmcode für die Sensorvorrichtung sowie die Sensorvorrichtung selber gelöst. Die Vorteile dieser Lösungen entsprechen im Wesentlichen den oben mit Bezug auf das beanspruchte Verfahren genannten Vorteilen.

Der Beschreibung sind insgesamt elf Figuren beigefügt, wobei
- Figur 1: einen Querschnitt durch die erfindungsgemäße Sensorvorrichtung, angebaut an einem optisch durchlässigen Körper;
- Figur 2: die Sensorvorrichtung als elektronische Schaltung mit zwei Sendezweigen;
- Figur 3: eine Draufsicht auf die Sensorvorrichtung;
- Figur 4: den Strahlengang eines R-Typ-Sendeelementes aus Figur 1 bei trockenem optisch durchlässigem Körper;
- Figur 5: den Strahlengang des R-Typ-Sendeelementes bei Vorhandensein von Feuchtigkeitstropfen auf der Außenseite des optisch durchlässigen Körpers;
- Figur 6: den Strahlengang eines S-Typ-Sendeelementes bei schmutzfreier Außenseite des optisch durchlässigen Körpers;
- Figur 7: den Strahlengang eines S-Typ-Sendeelementes bei Vorhandensein von Schmutzpartikeln auf der Außenseite des optisch durchlässigen Körpers;
- Figur 8: den Verlauf eines Differenzsignals und eines Regelsignals bei einer die Schaltfunktion auslösenden Bewegung eines nicht-transparenten körperlichen Gegenstandes im Detektionsbereich der Sensorvorrichtung;
- Figur 9: eine Veranschaulichung zur Auswertung des Differenzsignals und des Regelsignals gemäß der Erfindung; und
- Figuren 10a bis 10c: das erfindungsgemäße Verfahren
illustriert.

Die Erfindung wird nachfolgend in Form von Ausführungsbeispielen unter Bezugnahme auf die genannten Figuren detailliert beschrieben.

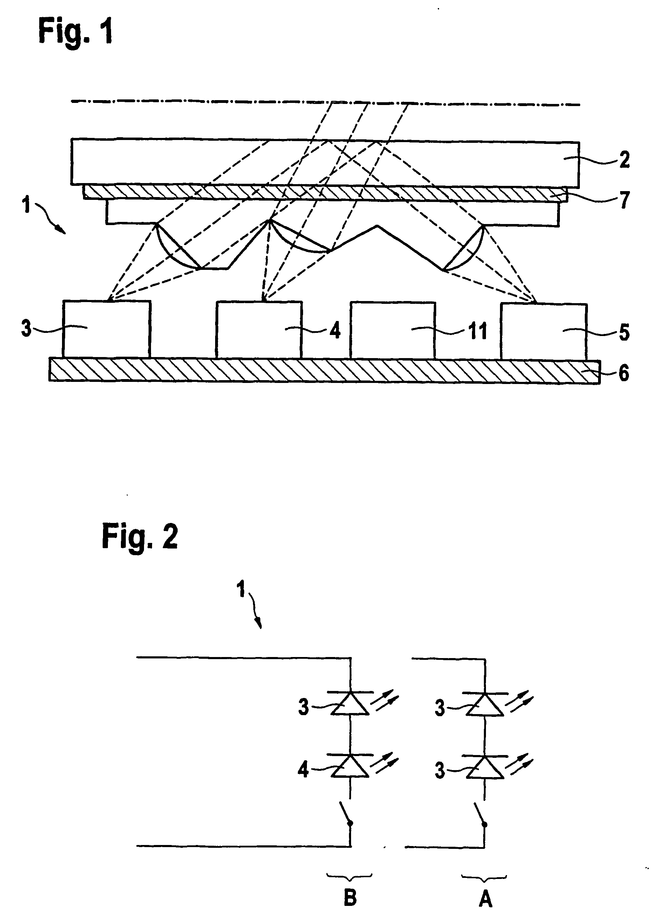

Figur 1 zeigt die erfindungsgemäße Sensorvorrichtung 1 zur Detektion von Störeinflüssen auf einer Außenseite eines optisch durchlässigen Körpers 2. Bei den Störeinflüssen kann es sich um Feuchtigkeitstropfen, insbesondere Regentropfen, oder um zumindest teilweise nicht-transparente körperliche Gegenstände, wie zum Beispiel Schmutzpartikel oder eine menschliche Hand handeln. Bei dem optisch durchlässigen Körper 2 handelt es sich zum Beispiel um die Heckscheibe eines Kraftfahrzeugs mit Heckklappe. Die Sensorvorrichtung 1 ist mit einem transparenten optischen Kopplungselement 7 an der Innenseite der Heckscheibe 2 befestigt. Sie umfasst mindestens ein optisches Empfangselement 5 sowie zwei Sendezweige A und B, mit jeweils zwei Sendeelementen 3, 4. Darüber hinaus umfasst die Sensorvorrichtung 1 eine Auswertevorrichtung 11 zum Auswerten verschiedener, weiter unten beschriebener interner Signale der Sensorvorrichtung 1, insbesondere eines Differenzsignals A - B und eines Regelsignals R, sowie zum Auslösen einer Schaltfunktion im Ansprechen auf die Auswertung der Signale.

Figur 2 zeigt den elektrischen Aufbau der Sensorvorrichtung 1. Es ist zu erkennen, dass die beiden separat angesteuerten Sendezweige A und B jeweils eine Reihenschaltung von optischen Sendeelementen 3 und 4 aufweisen.

Die einzelnen Sendeelemente in den Sendezweigen A und B haben teilweise unterschiedliche Aufgaben und sind deswegen mit den unterschiedlichen Bezugzeichen 3 beziehungsweise 4 bezeichnet, obwohl es sich bei all diesen Sendeelementen vorzugsweise um dieselben Leuchtdioden handelt. Die unterschiedlichen Funktionen erfüllen die einzelnen Sendeelemente aufgrund ihrer unterschiedlichen Anordnung beziehungsweise Ausrichtung innerhalb der Sensorvorrichtung 1 in Bezug auf das Empfangselement 5. Ihre unterschiedlichen Funktionen werden nachfolgend unter Bezugnahme auf die Figuren 1 und 3 bis 7 näher erläutert.

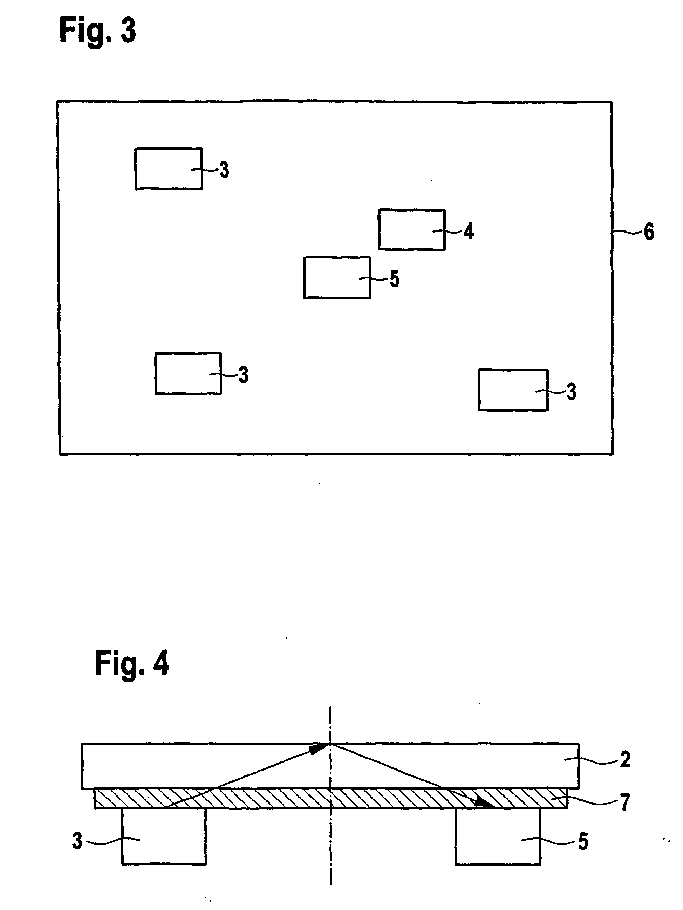

Bereits in Figur 1 ist zu erkennen, dass die auf einer elektronischen Leiterplatte 6 angeordneten Sendeelemente 3 und 4 einen unterschiedlichen Abstand zu dem Empfangselement 5 haben. Dies wird nochmals verdeutlicht durch die in Figur 3 gezeigte Draufsicht auf die besagte elektrische Leiterplatte 6. Diese unterschiedlichen Abstände der Sendeelemente 3, 4 zu dem Empfangselement 5 und ihre individuelle Ausrichtung befähigen die Sendeelemente zur Durchführung der ihnen zugewiesenen unterschiedlichen Funktionen.

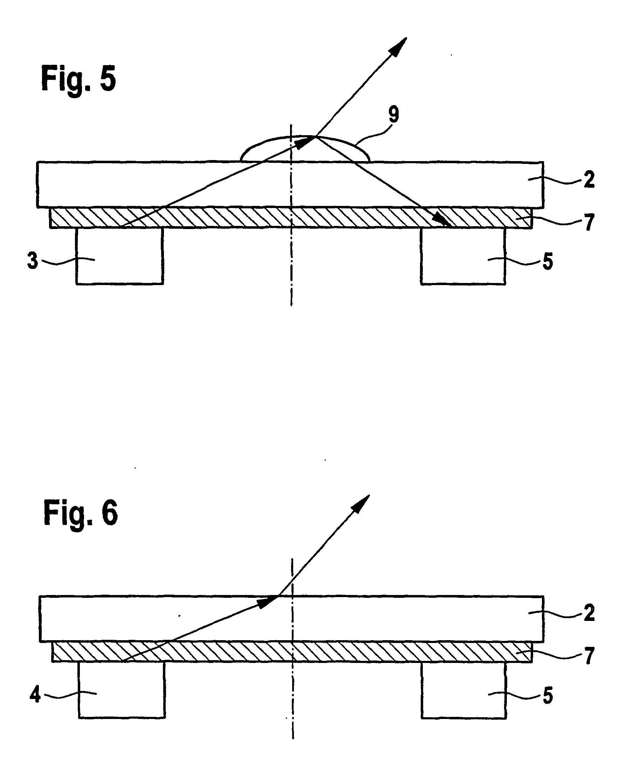

Die Sendeelemente 3, die einen größeren Abstand zu dem Empfangselement 5 aufweisen als die Sendeelemente 4, dienen zur Detektion von Feuchtigkeitstropfen, insbesondere Regentropfen, auf der Außenseite des optisch durchlässigen Körpers 2; sie werden deshalb nachfolgend auch als R-Typ-Sendeelemente (R: Regen) bezeichnet. Zu diesem Zweck sind sie, wie in Figur 4 veranschaulicht, in einem solchen Abstand zu dem Empfangselement 5 angeordnet und ausgerichtet, dass die von ihnen ausgesandten optischen Strahlen dann auf das Empfangselement 5 totalreflektiert werden, wenn keine Feuchtigkeits- beziehungsweise Regentropfen 9 auf der Außenseite der Heckscheibe 2 vorhanden sind. Für den Fall, dass Feuchtigkeitstropfen 9 auf der Außenseite des optisch durchlässigen Körpers 2 vorhanden sind, wird ein Großteil der von den Sendeelementen 3 ausgesandten optischen Strahlen aus dem optisch durchlässigen Körper 2 ausgekoppelt (siehe Figur 5). Nur noch ein geringer Teil der Strahlen wird dann auf das Empfangselement 5 zurückreflektiert; die von dem Zweig A empfangene Lichtleistung sinkt dann gegenüber der von dem Zweig B empfangenen Lichtleistung ab. Bei einem Betrieb der Sendeelemente 3 ist also ein Unterschied in der von dem Empfangselement 5 empfangenen Lichtleistung festzustellen, je nachdem, ob Feuchtigkeitstropfen auf der Außenseite des optisch durchlässigen Körpers 2 vorhanden sind oder nicht. Aufgrund dieser Differenz der empfangenen Lichtleistungen kann auf das Vorliegen von Feuchtigkeitstropfen geschlossen werden.

Demgegenüber dienen die Sendeelemente mit dem Bezugszeichen 4 zur Detektion der körperlichen Gegenstände, das heißt zum Beispiel von Schmutzpartikeln auf der Außenseite des optisch durchlässigen Körpers 2 oder einer menschlichen Hand beabstandet zu der Außenseite. Zu diesem Zweck sind die Sendeelemente 4 im Vergleich zu den Sendeelementen 3 vorzugsweise kürzer zu dem Empfangselement 5 beanstandet; eine Totalreflektion des von dem Sendeelement 3 ausgesandten Lichtes auf das Empfangselement 5 findet deshalb nicht statt. Wie aus Figur 6 ersichtlich ist, sind die Sendeelemente 3 innerhalb der Sensorvorrichtung 1 derart ausgerichtet, dass die von ihnen ausgesandten optischen Strahlen dann, wenn kein nicht-transparenter körperlicher Gegenstand in ihrem Detektionsbereich vorhanden ist, aus dem optisch durchlässigen Körper 2, das heißt insbesondere der Heckscheibe, ausgekoppelt werden. Es werden dann so gut wie keine Anteile der von ihnen ausgesandten Strahlung auf das Empfangselement 5 reflektiert.

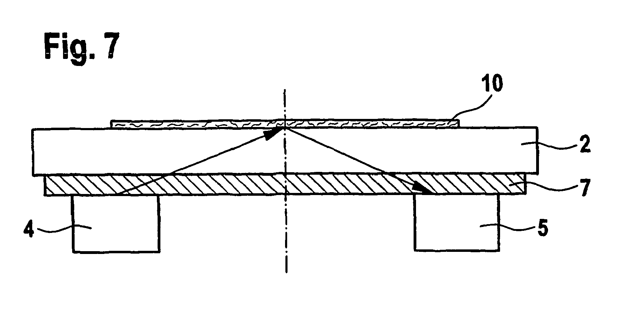

Anders ist die Situation jedoch, wenn sich ein zumindest teilweise nicht-transparenter körperlicher Gegenstand 10 im Strahlengang der Sensorvorrichtung befindet, wie dies in Figur 7 dargestellt ist. Dann werden die von den S-Typ-Sendeelementen 4 ausgesandten optischen Strahlen an dem nicht-transparenten körperlichen Gegenstand 10 gestreut und auf das Empfangselement 5 reflektiert. Mit Hilfe der S-Typ-Sendeelemente lässt sich aus einer Differenz zwischen den von dem Empfangselement 5 empfangenen Lichtleistungen der beiden Sendezweige A, B auf das Vorhandensein des körperlichen Gegenstandes 10 im Detektionsbereich der Sensorvorrichtung schließen.

Durch Abwechseln im Betrieb der in Figur 2 gezeigten beiden Sendezweige, wobei in den beiden Sendezweigen immer alle Sendeelemente aktiviert sein müssen, kann auf das Vorhandensein von Feuchtigkeitstropfen auf der Scheibe oder von nicht-transparenten Gegenständen auf oder vor der Außenseite des optisch durchlässigen Körpers 2 geschlossen werden.

Diese Fähigkeit der Sensorvorrichtung 1, den zumindest teilweise nicht-transparenten körperlichen Gegenstand 10 zu erkennen, macht sich die vorliegende Erfindung zunutze, um gegebenenfalls eine Schaltfunktion auszulösen.

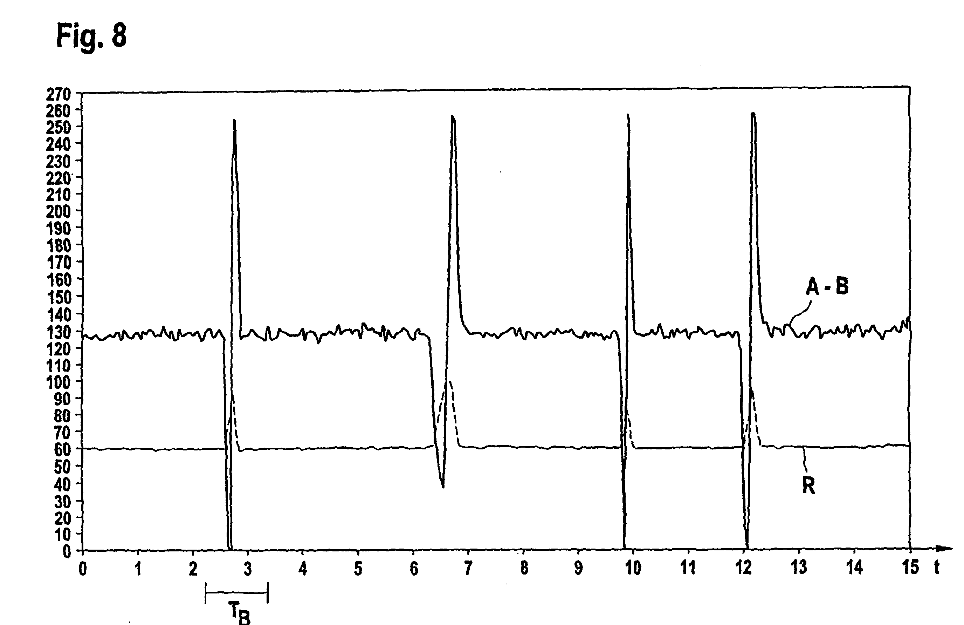

Erfindungsgemäß wird eine Schaltfunktion dann ausgeführt, wenn das Differenzsignal A - B und das Regelsignal R zumindest eine der in Figur 8 gezeigten vier charakteristischen Ausprägungen aufweist. Eine charakteristische Differenzsignalausprägung ist an zwei aufeinanderfolgenden Extremwerten innerhalb eines Beobachtungszeitfensters T_{B} zu erkennen. Genauer gesagt weist eine der Differenzsignalausprägungen des Differenzsignals A - B zunächst ein Minimum und nachfolgend ein Maximum auf. Gleichzeitig weist das Regelsignal R im Wesentlichen zu Beginn und am Ende des Beobachtungszeitfensters zumindest näherungsweise denselben Betragswert auf. Wenn die Auswerteeinrichtung 11 der Sensorvorrichtung 1 derartige Ausprägungen bei dem Differenzsignal A - B und dem Regelsignal R feststellt, dann löst sie die Schaltfunktion aus.

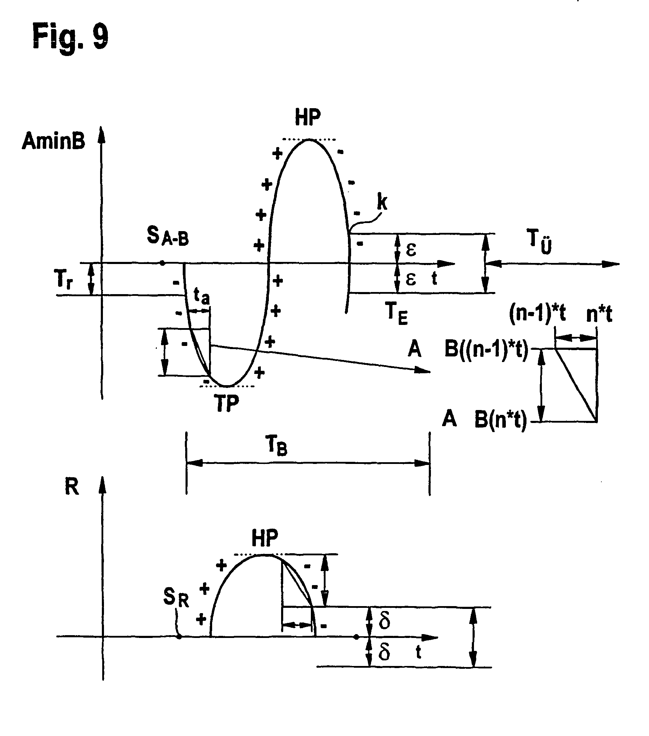

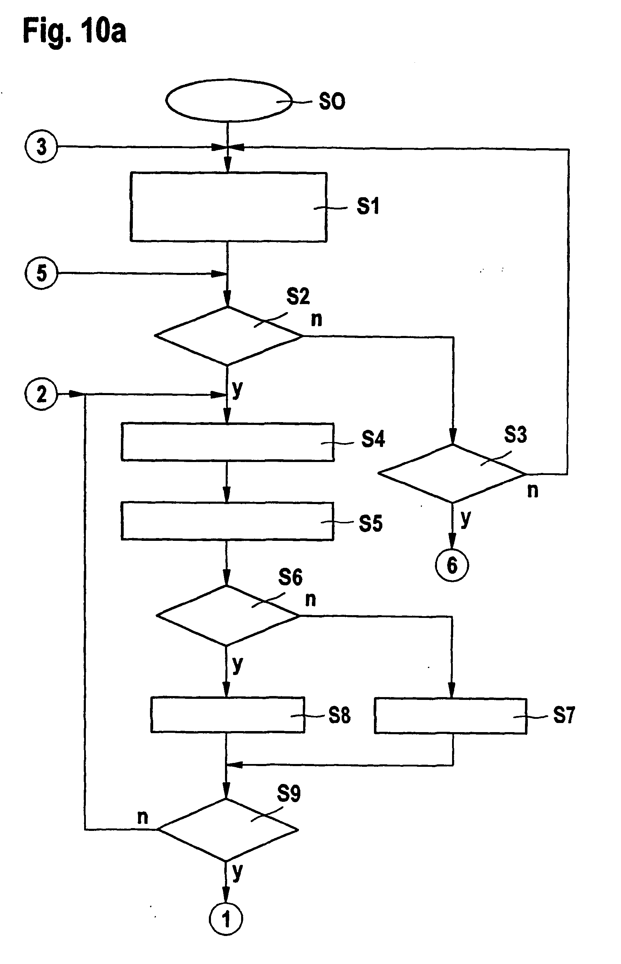

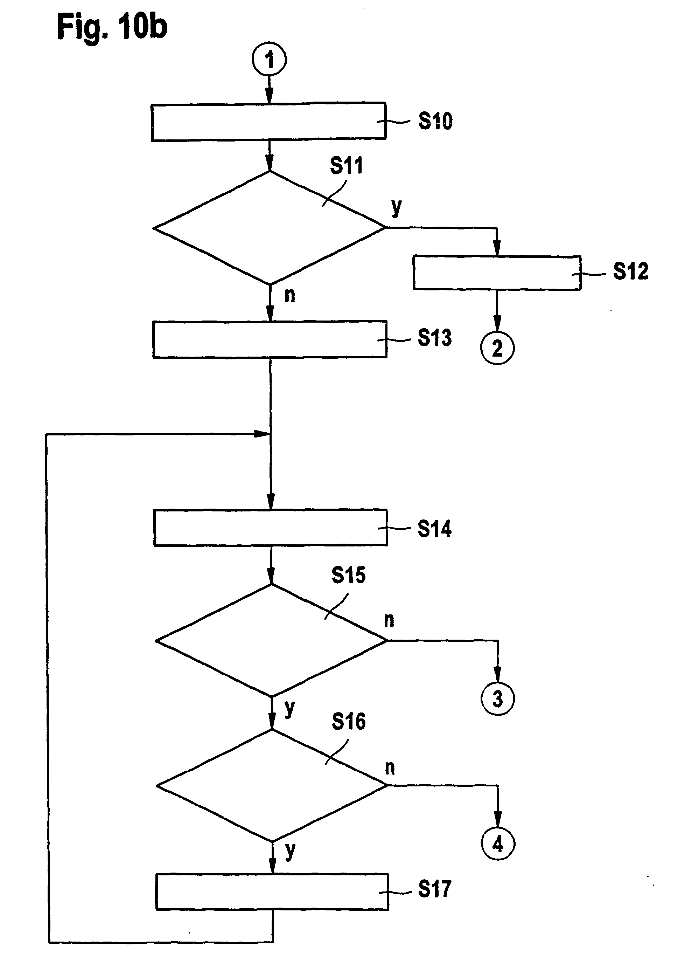

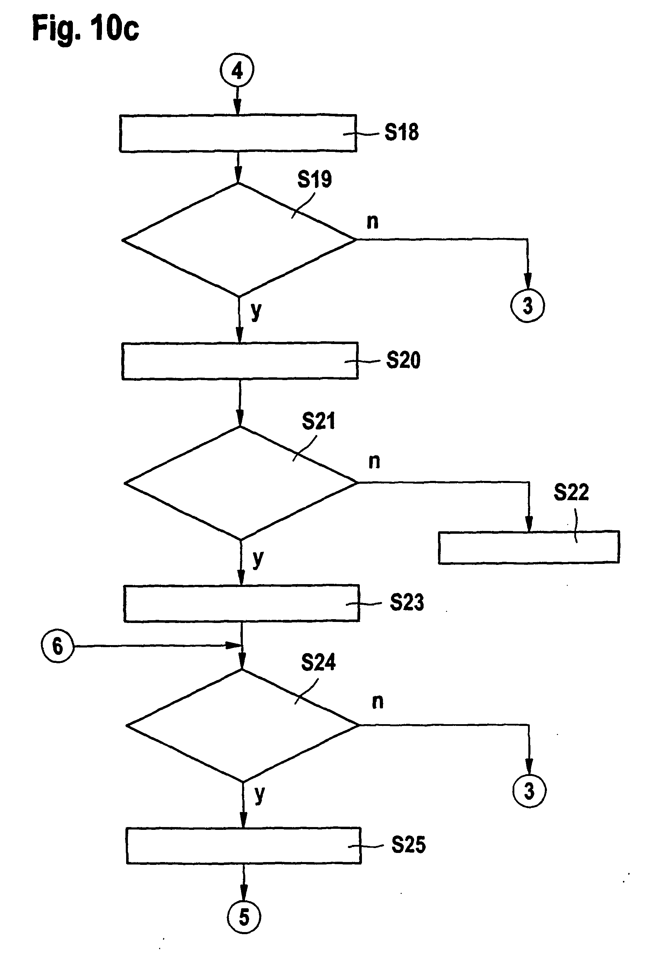

Das Verfahren zur Überprüfung ob die Voraussetzungen zur Auslösung einer Schaltfunktion gegeben sind oder nicht, wird nachfolgend unter Bezugnahme auf die Figuren 10a, b und c sowie auf Figur 9 näher beschrieben. Dabei gilt allgemein: Die Abtastung des Differenzsignals und des Regelsignals erfolgt vorzugsweise in einem Zeitabstand von tₐ < 50 ms, insbesondere alle 10 ms. Allgemein ist diese Abtastzeit an die Dynamik, mit welcher sich der nicht-transparente körperliche Gegenstand im Detektionsbereich der Sensorvorrichtung bewegt, anzupassen. Die genannte Abtastzeit ist relativ klein im Vergleich zu einer Handbewegung über der Sensorvorrichtung und ist deshalb für deren Auswertung gut geeignet.

Gemäß Figur 10a führt das erfindungsgemäße Verfahren nach einem Startschritt S0 zunächst einen Verfahrensschritt S1 aus, in dem allgemeine Initialisierungen vorgenommen werden. Insbesondere wird ein Speicher zur Speicherung von Abtastwerten des Differenzsignals und ein Speicher zur Speicherung von Abtastwerten des Regelsignals R jeweils mit einem Startwert vorbesetzt. Darüber hinaus werden auch alle anderen erforderlichen Resetwerte definiert.

In einem nachfolgenden Verfahrensschritt S2 wird durch Abfragen einer sogenannten Startbedingung geprüft, ob das Differenzsignal A - B möglicherweise eine charakteristische Differenzsignalausprägung aufweist. Dazu wird im Rahmen der Startbedingung lediglich geprüft, ob das Differenzsignal einen vorgegebenen Schwellenwert Tᵣ, welcher niedriger liegt als der normale Pegel des Differenzsignals, unterschreitet, siehe Figur 9. Wenn dem nicht so ist, schließt die Auswerteeinrichtung 11 im Verfahrensschritt S3 daraus, dass die charakteristische Differenzsignalausprägung nicht eingeleitet wurde und es findet dann ein Rücksprung auf den Beginn des Verfahrensschrittes S1 statt. Es wird dann weiterhin so lange gewartet, bis die Startbedingung gemäß S2 erfüllt ist.

Ist diese Startbedingung schließlich irgendwann erfüllt, so werden zwei Abtastwerte des Differenzsignals gebildet, S4.

Aus diesen beiden Abtastwerten wird der Differenzenquotient oder die Ableitung des Differenzsignals an der abgetasteten Stelle ermittelt, S5, und geprüft, ob die Steigung des Differenzsignals an der abgetasteten Stelle positiv oder negativ ist, S6. Die Erkenntnisse über das Vorzeichen der Steigung der Differenzsignalausprägung wird in den Verfahrensschritten S7 und S8 gespeichert. In einem Verfahrensschritt S9 wird dann nachfolgend das aktuell festgestellte Vorzeichen der Steigung des Differenzsignals beziehungsweise der Differenzsignalausprägung verglichen mit dem in einem vorangegangenen Durchlauf des Verfahrens, das heißt bei einer unmittelbar vorher durchgeführten Abtastung, festgestellten Vorzeichen der Steigung. Wenn dann im Verfahrensschritt S9 festgestellt wird, dass im Vergleich zu der vorherigen Prüfung kein Vorzeichenwechsel stattgefunden hat, so findet ein Rücksprung auf den Beginn des Verfahrensschrittes S4 statt. Die durch diesen Rücksprung auf den Beginn von Verfahrensschritt S4 charakterisierte Schleife wird so lange durchlaufen, wie bei der Differenzsignalausprägung eine beispielsweise negative Steigung festgestellt wird.

Erst wenn im Verfahrensschritt S9 ein Vorzeichenwechsel in der Steigung der Differenzsignalausprägung festgestellt wird, wird im Verfahrensschritt S10 ein Vorzeichenwechselzähler, welcher die Anzahl der festgestellten Vorzeichenwechsel bei der Differenzsignalausprägung repräsentiert, inkrementiert, das heißt bei dem ersten Feststellen eines Vorzeichenwechsels auf eins gesetzt.

Nachfolgend wird im Verfahrensschritt S11 geprüft, ob der aktuelle Zählerstand des Vorzeichenwechselzählers noch kleiner als ein vorgegebener Schwellenwert ist. Dieser Schwellenwert repräsentiert die vorbestimmte Anzahl von aufeinanderfolgenden Extremwerten, durch welche die charakteristische Differenzsignalausprägung des Differenzsignals gemäß der Erfindung definiert ist. Typischerweise wird dieser Schwellenwert zu zwei festgesetzt. Wird dann in Verfahrensschritt S11 festgestellt, dass bisher zum Beispiel erst ein von zwei vorgeschriebenen Extrema der charakteristischen Differenzsignalausprägung aufgetreten ist, so wird der Speicher zur Speicherung des zuletzt erfassten Vorzeichens der Steigung der Differenzsignalausprägung mit dem zuletzt erfassten Vorzeichen der Steigung neu besetzt (Verfahrensschritt S12). In Figur 9 ist bei der im oberen Teil dargestellten charakteristischen Differenzsignalausprägung zu erkennen, dass diese zunächst eine negative Steigung, dann ein Extremum in Form eines Tiefpunktes beziehungsweise Minimum und daran anschließend eine positive Steigung aufweist. Nachdem in den Verfahrensschritten 9 und 10 festgestellten ersten Extremum in Form des Tiefpunktes und nachdem in Verfahrensschritt S11 festgestellt wurde, dass von den insgesamt zwei charakteristischen Extrema TP, HP der Differenzsignalprägung erst das erste Extrema TP erkannt wurde, wird in Verfahrensschritt S12 der Speicher zur Speicherung der zuletzt erfassten Steigung für die Differenzsignalausprägung für das in Figur 9 gezeigte Beispiel auf ein positives Vorzeichen vorbesetzt. Nach Verfahrensschritt S12 findet dann wiederum ein Rücksprung auf den Beginn von Verfahrensschritt S4 statt, wonach die Verfahrensschritte S4 bis S9 so lange zyklisch durchlaufen werden, wie in Verfahrensschritt S9 ein erneuter Vorzeichenwechsel, diesmal ein Wechsel von einer positiven auf eine negative Steigung in der Differenzsignalausprägung erkannt wurde. In Verfahrensschritt S 10 wird dann der Vorzeichenwechselzähler zur Speicherung der innerhalb der Differenzsignalausprägung aufgetretenen Extrema weiter um eins erhöht, so dass er nun in Bezug auf das in Figur 9 gezeigte Beispiel auf einem Zählerstand von zwei angelangt ist. Dann wird in Verfahrensschritt S11 festgestellt, dass der aktuelle Zählerstand von zwei nicht mehr kleiner ist als die vorbestimmte Anzahl beziehungsweise der Schwellenwert von Extrema pro Differenzsignalausprägung (dieser war vorher beispielhaft ebenfalls auf zwei festgesetzt). Von Verfahrensschritt S4 verzweigt dann das erfindungsgemäße Verfahren nach Verfahrensschritt S13, wo es einen Stop- Bedingungstimer zur Überprüfung einer Stop-Bedingung aktiviert. Bei dem in Figur 10b gezeigten Beispiel ist dieser Timer mit einem vorbestimmten Wert, welcher eine gewünschte Sperrzeitdauer T_{E} repräsentiert, vorbesetzt. Nach seiner Aktivierung wird er kontinuierlich dekrementiert, bis er mit dem Ablauf der Sperrzeitdauer auf einem Zählerstand von Null angelangt ist.

Nach dem Starten dieses Timers, der gemäß Figur 9 vorzugsweise dann beginnt, wenn das Differenzsignal nach Durchlauf des zweiten Extremums HP einen weiteren vorgegebenen Schwellenwert K unterschritten hat. Es wird dann in Verfahrensschritt S14 der Betrag einer Differenz zwischen einem Abtastwert des Differenzsignals beziehungsweise der Differenzsignalausprägung nach der Aktivierung des Stop-Bedingungs-Timers und einem Startwert S_{A-B}, das heißt einem Abtastwert des Differenzsignals A - B vor Beginn der charakteristischen Differenzsignalausprägung gebildet. Erfindungsgemäß muss dieser Betrag kleiner als ein vorgegebener ε Wert liegen. Erfüllt der Verlauf des Differenzsignals diese Bedingung nicht, das heißt verlässt er noch einmal die ε Umgebung bevor der Stop-Bedingungs-Timer abgelaufen ist, so wird dies als Zeichen dafür gewertet, dass keine charakteristische Differenzsignalausprägung zur Auslösung einer Schaltfunktion vorgelegen hat. Die bisher festgestellte Differenzsignalausprägung wird dann als Voraussetzung zum Auslösen der Schaltfunktion verworfen und das Verfahren springt an den Beginn des Verfahrensschrittes S1 zur Neuinitialisierung aller Speicher und Zähler zurück. Insbesondere werden dann in Verfahrensschritt S1 der Stop-Bedingungs-Timer auf den Anfangswert und der Vorzeichenwechselzähler zum Zählen der erfassten Extrema der Differenzsignalausprägung auf Null gesetzt.

Wenn jedoch in Verfahrensschritt S15 festgestellt wird, dass das Differenzsignal die ε Umgebung nicht verlassen hat, wird in Verfahrensschritt S16 geprüft, ob der Stop-Bedingungs-Timer bereits abgelaufen, das heißt auf Null dekrementiert wurde. Wenn dann jedoch festgestellt wird, dass der Zählerstand noch größer Null ist, das heißt die durch den Stop-Bedingungs-Timer repräsentierte Sperrzeitdauer noch nicht abgelaufen ist, findet ein Rücksprung auf den Beginn des Verfahrensschrittes S14 statt, wobei dann die Differenz zwischen einem neuen abgetasteten Wert innerhalb des Startstop-Zeitintervalls und dem Startwert gebildet wird. Verfahrensschritt S15 wiederholt sich dann wie oben beschrieben.

Wird dann jedoch in Verfahrensschritt S16 festgestellt, dass der Stop-Bedingungs-Timer auf Null dekrementiert wurde, also nicht mehr größer Null ist, dann erfolgt gemäß der Schritte S18 und S19 eine Auswertung des Regelsignals R innerhalb desselben Beobachtungszeitfensters T_{B}. Dazu wird zunächst in Verfahrensschritt S18 eine Differenz zwischen zwei Abtastwerten des Regelsignals R im Wesentlichen zu Beginn und am Ende des Beobachtungszeitfensters T_{B} gebildet. Es wird dann geprüft, ob der Betrag dieser Differenz näherungsweise Null ist, das heißt ob diese Differenz innerhalb einer vorgegebenen δ-Umgebung liegt (siehe Figur 9). Wenn dem nicht so ist, ist dies ein weiteres Verwerfungskriterium für die zuvor detektierte Differenzsignalausprägung. Es erfolgt dann wiederum ein Rücksprung des Verfahrens auf den Beginn des Verfahrensschrittes S1 und die bisher detektierte Differenzsignalausprägung wird nicht als Voraussetzung zum Auslösen der Schaltfunktion gewertet.

Wenn dagegen in Verfahrensschritt S19 festgestellt wird, dass der abgetastete Wert am Ende des Beobachtungszeitfensters T_{B} und der Wert S_{R} an dessen Beginn in etwa gleich groß sind, dann wird ein Zähler zum Zählen der Anzahl der gültigen detektierten, charakteristischen Differenzsignalausprägungen in Verfahrensschritt S20 inkrementiert. Es wird dann in Verfahrensschritt S21 durch Auswerten dieses Zählerstandes überprüft, ob die erforderliche Anzahl an charakteristischen Differenzsignalausprägungen zum Auslösen der Schaltfunktion bereits detektiert wurde. Wenn dem nicht so ist, dann verzweigt das Verfahren weiter auf Schritt S23, in dem ein weiterer Zähler und damit ein weiteres Zeitintervall, das sogenannte Übergangszeitintervall To, gestartet wird. Es schließt sich an die durch den Stop-Bedingungs-Timer definierte Sperrzeitdauer T_{E} an. Innerhalb dieses Übergangszeitintervalls T_{Ü} muss der Beginn einer neuen charakteristischen Differenzsignalausprägung detektiert werden. Diese Überprüfung erfolgt durch die Abfrage in Verfahrensschritt S24, ob das Übergangszeitintervall bereits abgelaufen ist oder nicht. Wenn dies noch nicht der Fall ist, wird in Verfahrensschritt S25 der das Übergangszeitintervall repräsentierende Timer um eins dekrementiert und es findet ein Rücksprung auf den Beginn des Verfahrensschrittes S2 statt. In Verfahrensschritt S2 und den nachfolgenden Verfahrensschritten findet dann eine erneute Überprüfung dahingehend statt, ob das Differenzsignal A - B eine charakteristische Differenzsignalausprägung zeigt. Sollte jedoch in Verfahrensschritt S24 festgestellt werden, dass das Übergangszeitintervall T_{Ü} bereits abgelaufen ist, ohne dass eine erforderliche weitere charakteristische Differenzsignalausprägung in dem Differenzsignal detektiert wurde, so ist damit ein eventuell definiertes weiteres Zusatzkriterium nicht erfüllt und alle eventuell vorher detektierten, bis dahin gültigen charakteristischen Differenzsignalausprägungen werden verworfen; das Verfahren verzweigt dann erneut auf den Beginn des Verfahrensschrittes S1, ab wo das Vorliegen der zum Auslösen der Schaltfunktion erforderlichen Voraussetzungen wieder komplett neu geprüft wird; in der Vergangenheit detektierte Teilvoraussetzungen werden nicht mehr anerkannt.

Die Sensorvorrichtung 1 kann eine optische Anzeige (nicht gezeigt) aufweisen. Mit dem Aufleuchten dieser Anzeige wird dem Bediener der Sensorvorrichtung signalisiert, dass er nach einer ersten durchgeführten Handbewegung, welche eine erste charakteristische Differenzsignalausprägung in der Sensorvorrichtung induziert hat, noch Zeit hat, eine zweite solche Handbewegung zu wiederholen, um damit eine beispielhaft erforderliche zweite charakteristische Differenzsignalausprägung in der Sensorvorrichtung zu induzieren.

Neben den bisher genannten Voraussetzungen kann als weitere Voraussetzung zum Auslösen der Schaltfunktion vorgesehen sein, dass die Person, welche die Differenzsignalausprägung verursacht, als authorisiert zur Auslösung der Schaltfunktion erkannt wird. Dies kann beispielsweise mit Hilfe eines dieser Person zugeordneten Transponders erfolgen, welcher mit einer dem Fahrzeug zugeordneten Kommunikationseinrichtung (nicht gezeigt) in Verbindung steht. Weitere Kriterien zum Auslösen der Schaltfunktion und insbesondere einem damit gekoppelten Öffnen der Heckklappe können sein, dass die Zündung des Fahrzeugs aktiviert oder deaktiviert ist und/oder dass es nicht regnet.

Soll mit der Schaltfunktion eine Entriegelung der Heckklappe eines Fahrzeugs erfolgen, so kann diese Entriegelung über einen elektromechanischen Antrieb, zum Beispiel einen Stellmotor, einen Elektromagneten oder einen Linearantrieb, erfolgen. Die Sensorvorrichtung kann auch dazu verwendet werden, um die Heckklappe wieder automatisch mit einem Motor zu schließen.

## Patentansprüche

1. Verfahren zum Betreiben einer Sensorvorrichtung (1) zur Detektion von Störeinflüssen (9, 10) auf einer Außenseite eines optisch durchlässigen Körpers (2), wobei der Sensorvorrichtung (1) auf der Innenseite des Körpers (2) angeordnet ist und mindestens ein optisches Empfangselement (5) sowie mindestens einen ersten Sendezweig (A) mit mindestens zwei R-Typ-Sendeelementen (3) sowie einen zweiten Sendezweig (B) mit mindestens einem R-Typ-Sendeelement (3) und mindestens einem S-Typ-Sendelement (4) aufweist; und
wobei die R-Typ-Sendeelemente (3) derart ausgerichtet sind, dass ein Großteil der von ihnen ausgesandten optischen Strahlen ohne Feuchtigkeitstropfen (9) an der Außenseite des Körpers (2) auf das Empfangselement (5) totalreflektiert werden; und
wobei das S-Typ-Sendeelement (4) derart ausgerichtet ist, dass ein Großteil der von ihm ausgesandten optischen Strahlen beim Auftreffen auf einen zumindest teilweise nicht-transparenten körperlichen Gegenstand (10) auf der Außenseite oder beabstandet zu der Außenseite des Körpers (2) zumindest teilweise an dem körperlichen Gegenstand gestreut und auf das Empfangselement (5) zurückreflektiert werden;
umfassend die folgenden Schritte:
Sa) Betreiben des ersten Sendezweiges (A) und Ermitteln der von dem Empfangselement (5) empfangenen Lichtleistung nach Totalreflexion des Lichtes an dem optisch durchlässigen Körper (2) in Form eines ersten Signals (SA);
Sb) Betreiben des zweiten Sendezweiges (B) und Ermitteln der von dem Empfangselement (5) empfangenen Lichtleistung nach der Streuung des Lichtes an dem nicht-transparenten körperlichen Gegenstand in Form eines zweiten Signals (SB);
Sc) Bilden und Auswerten eines Differenzsignals (A-B), welches die Differenz zwischen dem ersten und dem zweiten Signal repräsentiert; und
Sd) Bilden und Auswerten eines Regelsignals (R), welches den Verlauf derjenigen Leistung über der Zeit repräsentiert, um welche die Sendeleistung der Sendeelemente desjenigen Zweiges während einer nachfolgenden Wiederholung der Schritte Sa, Sb und Sc erhöht wird, von dem zumindest temporär während der letzten Durchführung der Schritte Sa und Sb weniger Licht empfangen wurde, als von dem anderen Zweig, um die von den beiden Zweigen (A, B) empfangene Lichtleistung wieder auszugleichen;
**gekennzeichnet durch**
Auslösen einer Schaltfunktion dann, wenn das Differenzsignal (A-B) mindestens eine charakteristische Differenzsignalausprägung in Form von einer vorbestimmten Anzahl von aufeinanderfolgenden Extremwerten innerhalb eines vorgegebenen Beobachtungszeitfensters (T_{B}) aufweist und wenn das Regelsignal (R) im Wesentlichen zu Beginn und am Ende des Beobachtungszeitfensters (T_{B}) zumindest näherungsweise denselben Betragswert aufweist.

2. Verfahren nach Anspruch 1, **gekennzeichnet durch**:
Überprüfen als ein erstes Zusatzkriterium, ob die Beträge von Differenzen zwischen jeweils einem Startwert des Differenzsignals vor Beginn der Differenzsignalausprägung und verschiedenen Endwerten des Differenzsignals, welche alle während einer vorbestimmten Sperrzeitdauer (T_{E}) am Ende der Differenzsignalausprägung abgetastet werden, innerhalb einer vordefinierten ε-Umgebung bleiben; und
Anerkennen der Differenzsignalausprägung als zumindest eine erfüllte Voraussetzungen zur Auslösung der Schaltfunktion, wenn das erste Zusatzkriterium erfüllt ist; oder andernfalls Verwerfen der Differenzsignalausprägung als Voraussetzung zur Auslösung der Schaltfunktion.

3. Verfahren nach Anspruch 2, **dadurch gekennzeichnet, dass** bei einer Vorgabe, dass die Schaltfunktion nur dann ausgelöst werden soll, wenn mehrere Differenzsignalausprägungen nacheinander aufgetreten sind, folgende Schritte ausgeführt werden:
Überprüfen als ein zweites Zusatzkriterium, ob eine nachfolgende Differenzsignalausprägung innerhalb eines vordefinierten Übergangszeitintervalls (T_{Ü}) nach Ablauf der Sperrzeitdauer (T_{E}) einer vorausgegangenen Differenzsignalausprägung zumindest begonnen hat aufzutreten; und
Anerkennen aller vorausgegangenen Differenzsignalausprägungen als zumindest eine erfüllte Voraussetzungen zur Auslösung der Schaltfunktion und
Fortsetzung der Prüfung der weiteren Voraussetzungen durch Auswerten der nachfolgenden Differenzausprägung, wenn das zweite Zusatzkriterium erfüllt ist, oder andernfalls Verwerfen aller vorausgegangenen und der nachfolgenden Differenzsignalausprägung als erfüllte Voraussetzungen zur Auslösung der Schaltfunktion.

4. Verfahren nach einem der vorangegangenen Ansprüche, **dadurch gekennzeichnet, dass** der Beginn einer Differenzsignalausprägung **dadurch** detektiert wird, dass ein Signalwert der Differenzsignalausprägung einen vorgegebenen Startschwellenwert unter- oder übersteigt.

5. Verfahren nach einem der vorangegangenen Ansprüche, **dadurch gekennzeichnet, dass** der körperliche Gegenstand (10) eine Hand ist, welche sich relativ zu der Außenseite des optisch durchlässigen Körpers (2) bewegt.

6. Verfahren nach einem der vorangegangenen Ansprüche, **dadurch gekennzeichnet, dass** die Schaltfunktion nur dann ausgeführt wird, wenn zusätzlich die Person, welche die Differenzsignalausprägung verursacht, als authorisiert zur Auslösung der Schaltfunktion erkannt wird.

7. Verfahren nach einem der vorangegangenen Ansprüche, **dadurch gekennzeichnet, dass** wenn die Sensorvorrichtung (1) auf der Innenseite einer Heckscheibe als optisch durchlässiger Körper (2) eines Kraftfahrzeugs mit Heckklappe angeordnet ist, die Schaltfunktion dann, wenn alle jeweils definierten Voraussetzungen erfüllt sind, ein Öffnen der Heckklappe veranlasst.

8. Computerprogramm mit Programmcode für eine Sensorvorrichtung (1) **dadurch gekennzeichnet, dass** der Programmcode ausgebildet ist zur Durchführung des Verfahrens nach einem der Ansprüche 1-7.

9. Sensorvorrichtung (1) zur Detektion von Störeinflüssen (9, 10) auf der Außenseite eines optisch durchlässigen Körpers (2), wobei die Sensorvorrichtung (1) auf der Innenseite des Körpers (2) angeordnet ist und aufweist:
mindestens ein optisches Empfangselement (5) sowie mindestens einen ersten Sendezweig (A) mit mindestens zwei R-Typ-Sendeelementen (3) sowie einen zweiten Sendezweig (B) mit mindestens einem R-Typ-Sendeelement (3) und mindestens einem S-Typ-Sendelement (4); wobei die R-Typ-Sendeelemente (3) derart ausgerichtet sind, dass ein Großteil der von ihnen ausgesandten optischen Strahlen ohne Feuchtigkeitstropfen (9) an der Außenseite des Körpers (2) auf das Empfangselement (5) totalreflektiert werden; und
wobei das S-Typ-Sendeelement (4) derart ausgerichtet ist, dass ein Großteil der von ihm ausgesandten optischen Strahlen beim Auftreffen auf einen zumindest teilweise nicht-transparenten körperlichen Gegenstand (10) auf der Außenseite oder beabstandet zu der Außenseite des Körpers (2) zumindest teilweise an dem körperlichen Gegenstand (10) gestreut und auf das mindestens eine Empfangselement (5) zurückreflektiert werden; und
eine Auswerteeinrichtung (11) zum Ermitteln der von dem Empfangselement (5) empfangenen Lichtleistung nach Totalreflexion des Lichtes an dem optisch durchlässigen Körper (2) in Form eines ersten Signals (SA); zum Ermitteln der von dem Empfangselement (5) empfangenen Lichtleistung nach der Streuung des Lichtes an dem nicht-transparenten körperlichen Gegenstand (10) in Form eines zweiten Signals (SB); und zum Bilden und Auswerten eines Differenzsignals (A-B), welches die Differenz zwischen dem ersten und dem zweiten Signal repräsentiert, sowie zum Bilden und Auswerten eines Regelsignals (R), welches den Verlauf derjenigen Leistung über der Zeit repräsentiert, um welche die Sendeleistung der Sendeelemente desjenigen Zweiges während einer nachfolgenden Wiederholung der Schritte Sa, Sb und Sc erhöht wird, von dem zumindest temporär während der letzten Durchführung der Schritte Sa und Sb weniger Licht empfangen wurde, als von dem anderen Zweig, um die von den beiden Zweigen (A, B) empfangene Lichtleistung wieder auszugleichen;
**dadurch gekennzeichnet, dass**
die Auswertevorrichtung (11) weiterhin ausgebildet ist, eine Schaltfunktion dann auszulösen, wenn das Differenzsignal (A-B) mindestens eine charakteristische Differenzsignalausprägung in Form von einer vorbestimmten Anzahl von aufeinanderfolgenden Extremwerten innerhalb eines vorgegebenen Beobachtungszeitfensters (T_{B}) aufweist und wenn das Regelsignal (R) im Wesentlichen zu Beginn und am Ende des Beobachtungszeitfensters (T_{B}) zumindest näherungsweise denselben Betragswert aufweist.

10. Sensorvorrichtung nach Anspruch 9, **dadurch gekennzeichnet, dass** die Auswerteeinrichtung weiterhin ausgebildet ist zur Durchführung der Verfahren nach einem der Ansprüche 2-7.

## Claims

1. Method for operating a sensor device (1) for detecting interference (9, 10) on an outside of an optically transparent body (2), the sensor device (1) being arranged on the inside of the body (2) and having at least one optical receiving element (5) and at least one first transmitting branch (A) with at least two R-type transmitting elements (3) and a second transmitting branch (B) with at least one R-type transmitting element (3) and at least one S-type transmitting element (4); and the R-type transmitting element (3) being oriented in such a way that a major part of the optical beams emitted by it are totally reflected, in the absence of moisture drops (9) on the outside of the body (2), onto the receiving element (5); and the S-type transmitting element (4) being oriented in such a way that, on striking an at least partly non-transparent physical object (10) on the outside or a distance away from the outside of the body (2), a major part of the optical beams emitted by said transmitting element are at least partly scattered by the physical object and reflected back onto the receiving element (5); comprising the following steps:
Sa) operation of the first transmitting branch (A) and determination of the light power received by the receiving element (5) after total reflection of the light by the optically transparent body (2) in the form of a first signal (SA);
Sb) operation of the second transmitting branch (B) and determination of the light power received by the receiving element (5) after scattering of the light by the non-transparent physical object in the form of a second signal (SB);
Sc) formation and evaluation of a difference signal (A, B) which represents the difference between the first and the second signal; and
Sd) formation and evaluation of a control signal (R) which represents the variation of that power as a function of time by which the transmitting power of the transmitting element of that branch is increased during a subsequent repetition of steps Sa, Sb and Sc from which at least temporarily less light was received when steps Sa and Sb were last carried out than from the other branch, in order to equalize the light power received from the two branches (A, B);
**characterized by**
triggering of a switching function when the difference signal (A-B) has at least one difference signal characteristic in the form of a predetermined number of successive extreme values within a predetermined observation time window (T_{B}) and when the control signal (R) has at least approximately the same magnitude substantially at the beginning and at the end of the observation time window (T_{B}).

2. Method according to Claim 1, **characterized by**:
checking, as a first additional criterion, whether the magnitudes of differences between in each case a starting value of the difference signal before the beginning of the difference signal characteristic and various end values of the difference signal, all of which are polled during a predetermined blocking time (T_{E}) at the end of the difference signal characteristic remain within a predetermined ε-environment; and
recognition of the difference signal characteristic as at least one fulfilled precondition for triggering the switching function if the first additional criterion is fulfilled; or otherwise discarding the difference signal characteristic as a precondition for triggering the switching function.

3. Method according to Claim 2, **characterized in that**, on specification that the switching function is to be triggered only when a plurality of difference signal characteristics have occurred in succession, the following steps are carried out:
checking, as a second additional criterion, whether a subsequent difference signal characteristic has at least started to occur within a predefined transition time interval (T_{ü}) after expiry of the blocking time (T_{E}) of a preceding difference signal characteristic; and
recognition of all preceding difference signal characteristics as at least one fulfilled precondition for triggering the switching function and continuing the testing of the further preconditions by evaluation of the subsequent difference characteristic if the second additional criterion is fulfilled, or otherwise discarding of all preceding difference signal characteristics and the subsequent difference signal characteristic as fulfilled preconditions for triggering the switching function.

4. Method according to any of the preceding Claims, **characterized in that** the beginning of a difference signal characteristic is detected by virtue of the fact that a signal value of the difference signal characteristic falls below or exceeds a specified starting threshold value.

5. Method according to any of the preceding Claims, **characterized in that** the physical object (10) is a hand which is moved relative to the outside of the optically transparent body (2).

6. Method according to any of the preceding Claims, **characterized in that** the switching function is performed only when the person who causes the difference signal characteristic is additionally recognised as being authorised to trigger the switching function.

7. Method according to any of the preceding Claims, **characterized in that**, if the sensor device (1) is arranged on the inside of a rear window as an optically transparent body (2) of a motor vehicle having a tailgate, the switching function triggers opening of the tailgate when all preconditions defined in each case have been fulfilled.

8. Computer program having a program code for a sensor device (1), **characterized in that** the program code is formed for carrying out the method according to any of Claims 1-7.

9. Sensor device (1) for detecting interference (9, 10) on the outside of an optically transparent body (2), the sensor device (1) being arranged on the inside of the body (2) and having: at least one optical receiving element (5) and at least one first transmitting branch (A) with at least two R-type transmitting elements (3) and a second transmitting branch (B) with at least one R-type transmitting element (3) and at least one S-type transmitting element (4); the R-type transmitting elements (3) being oriented in such a way that a major part of the optical beams emitted by them are totally reflected in the absence of moisture drops (9) on the outside of the body (2) on to the receiving element (5); and
the S-type transmitting element (4) being oriented in such a way that, on striking an at least partly non-transparent physical object (10) on the outside or a distance away from the outside of the body (2), a major part of the optical beams emitted by said transmitting element are at least partly scattered by the physical object (10) and reflected back onto the at least one receiving element (5); and
an evaluation device (11) for determining light power received by the receiving element (5) after total reflection of the light by the optically transparent body (2) in the form of a first signal (SA); for determining the light power received by the receiving element (5) after scattering of the light by the non-transparent physical object (10) in the form of a second signal (SB); and for the formation and evaluation of a difference signal (A-B) which represents the difference between the first and the second signal, and for the formation and evaluation of a control signal (R) which represents the variation of that power as a function of time by which the transmitting power of the transmitting elements of that branch is increased during a subsequent repetition of the steps Sa, Sb and Sc from which less light was received at least temporarily when steps Sa and Sb were last carried out than from the other branch, in order to equalise the light power received by the two branches (A, B) ;
**characterized in that**
the evaluation device (11) is furthermore formed to trigger a switching function when the difference signal (A-B) has at least one difference signal characteristic in the form of a predetermined number of successive extreme values within a specified observation time window (T_{B}) and when the control signal (R) has at least approximately the same magnitude substantially at the beginning and at the end of the observation time window (T_{B}).

10. Sensor device according to Claim 9, **characterized in that** the evaluation device is furthermore formed for carrying out the method according to any of Claims 2-7.

## Revendications

1. Procédé pour l'exploitation d'un dispositif capteur (1) pour la détection d'influences parasites (9, 10) sur un côté extérieur d'un corps (2) visuellement transparent, le dispositif capteur (1) étant disposé sur le côté intérieur du corps (2) et présentant au moins un élément de réception (1) optique et au moins une première branche d'émission (A) comprenant au moins deux éléments d'émission de type R (3) et une seconde branche d'émission (B) comprenant au moins un élément d'émission de type R (3) et au moins un élément d'émission de type S (4), et
les éléments d'émission (3) de type R étant orientés de telle sorte qu'une grande partie des faisceaux optiques émis par eux sont totalement réfléchis sans goutte d'humidité (9) sur le côté extérieur du corps (2) sur l'élément de réception (5), et
l'élément d'émission de type S (4) étant orienté de telle sorte qu'une grande partie des faisceaux optiques émis par lui est diffusée au moins partiellement sur l'objet physique lors de l'arrivée sur un objet physique (10) au moins en partie non transparent sur le côté extérieur ou à distance du côté extérieur du corps (2) et sont réfléchis sur l'élément de réception (5), comprenant les étapes suivantes :
Sa) exploitation de la première branche d'émission (1) et détermination de la puissance de lumière reçue de l'élément de réception (1) après la réflexion totale de la lumière sur le corps (2) visuellement transparent sous la forme d'un premier signal (SA) ;
Sb) exploitation de la seconde branche d'émission (B) et détermination de la puissance de lumière reçue de l'élément de réception (5) après la diffusion de la lumière sur l'objet physiquement non transparent sous la forme d'un second signal (SB) ;
Sc) formation et analyse d'un signal différentiel (A-B), qui représente une différence entre le premier et le second signal ; et
Sd) formation et analyse d'un signal de réglage (R) qui représente la variation de la puissance dans le temps, de laquelle la puissance d'émission des éléments d'émission de la branche est augmentée pendant une répétition consécutive des étapes Sa, Sb et Sc, de laquelle on a reçu au moins temporairement, pendant la dernière exécution des étapes Sa et Sb, moins de lumière que de la première branche, afin de compenser à nouveau la puissance de lumière reçue des deux branches (A, B),
**caractérisé par**
le déclenchement d'une fonction de commutation dans le cas où le signal différentiel (A-B) présente au moins un marquage caractéristique de signal différentiel sous la forme d'un nombre prédéfini de valeurs extrêmes successives à l'intérieur d'une fenêtre de temps d'observation (T_{B}) prédéfinie et lorsque le signal de réglage (R) présente au moins approximativement la même valeur de montant essentiellement au début et à la fin de la fenêtre de temps d'observation (T_{B}).

2. Procédé selon la revendication 1, **caractérisé par** :
vérification sous la forme d'un premier critère supplémentaire si les montants des différences entre respectivement une valeur de démarrage du signal différentiel avant le début du marquage de signal différentiel et différentes valeurs extrêmes du signal différentiel, qui sont toutes balayées pendant une durée de blocage (T_{E}) prédéfinie à la fin du marquage de signal différentiel, restent à l'intérieur d'un environnement ε prédéfini ; et reconnaissance du marquage du signal différentiel en tant qu'au moins une condition satisfaite préalable au déclenchement de la fonction de commutation si le premier critère supplémentaire est rempli ; ou autrement rejet du marquage de signal différentiel comme condition préalable au déclenchement de la fonction de commutation.

3. Procédé selon la revendication 2, **caractérisé en ce que**, lors d'une spécification que la fonction de commutation ne doit être déclenchée que si plusieurs marquages de signal différentiel sont apparus de façon successive, les étapes suivantes sont exécutées :
vérification en tant qu'un second critère supplémentaire si un marquage consécutif du signal différentiel a au moins commencé à apparaître dans un intervalle de temps de transition (T_{Ü}) prédéfini après l'expiration de la durée de blocage (T_{E}) d'un marquage précédant de signal différentiel ; et
reconnaissance de tous les marquages précédents de signal différentiel sous la forme d'au moins une condition satisfaite préalable au déclenchement de la fonction de commutation et poursuite du contrôle des autres conditions préalables par l'analyse du marquage de différence consécutif, lorsque le second critère supplémentaire est satisfait, ou autrement rejet de tous les marquages de signal différentiel précédents et du marquage de signal différentiel suivant comme conditions satisfaites préalables au déclenchement de la fonction de commutation.

4. Procédé selon l'une quelconque des revendications précédentes,
**caractérisé en ce que** le début d'un marquage de signal différentiel est détecté par le fait qu'une valeur de signal du marquage du signal différentiel n'atteint pas ou dépasse une valeur seuil de démarrage prédéfinie.

5. Procédé selon l'une quelconque des revendications précédentes,
**caractérisé en ce que** l'objet physique (10) est une main qui se déplace par rapport au côté extérieur du corps (2) visuellement transparent.

6. Procédé selon l'une quelconque des revendications précédentes,
**caractérisé en ce que** la fonction de commutation est exécutée seulement dans les cas où en supplément la personne, qui provoque le marquage du signal différentiel, est reconnue comme autorisée pour le déclenchement de la fonction de commutation.

7. Procédé selon l'une quelconque des revendications précédentes,
**caractérisé en ce que**, lorsque le dispositif capteur (1) est disposé sur le côté intérieur d'une lunette arrière en tant que corps (2) visuellement transparent d'un véhicule automobile avec hayon arrière, la fonction de commutation ordonne une ouverture du hayon arrière dans les cas où toutes les conditions préalables respectivement définies sont remplies.

8. Programme informatique avec code de programme pour un dispositif capteur (1), **caractérisé en ce que** le code de programme est conçu pour l'application du procédé selon l'une quelconque des revendications 1 à 7.

9. Dispositif capteur (1) pour la détection d'influences parasites (9, 10) sur le côté extérieur d'un corps (2) visuellement transparent, le dispositif capteur (1) étant disposé sur le côté intérieur du corps (2) et présentant : au moins un élément de réception (5) optique ainsi qu'au moins une première branche d'émission (A) avec au moins deux éléments d'émission du type R (3) et une seconde branche d'émission (B) avec au moins un élément d'émission du type R (3) et au moins un élément d'émission de type S (4), les éléments d'émission de type R (3) étant orientés de telle sorte qu'une grande partie des faisceaux optiques émis par eux sont réfléchis totalement sans goutte d'humidité (9) sur le côté extérieur du corps (2) sur l'élément de réception (5) ; et
l'élément d'émission de type S (4) étant orienté de telle sorte qu'une grande partie des faisceaux optiques émis par lui est diffusée au moins partiellement sur l'objet (10) physique lors de l'arrivée sur un objet (10) physique au moins partiellement non transparent sur le côté extérieur ou à distance du côté extérieur du corps (2) et est réfléchie sur le au moins un élément de réception (5) ; et
un dispositif d'analyse (11) pour déterminer la puissance de lumière reçue de l'élément de réception (5) après la réflexion totale de la lumière sur le corps (2) visuellement transparent sous la forme d'un premier signal (SA) ; pour la détermination de la puissance de lumière reçue de l'élément de réception (5) après la diffusion de la lumière sur l'objet (10) physiquement non transparent sous la forme d'un second signal (SB) ; et pour la formation et l'analyse d'un signal différentiel (A-B), qui représente la différence entre le premier signal et le second signal, ainsi que pour la formation et l'analyse d'un signal de réglage (R), qui représente le tracé de la puissance en fonction du temps, de laquelle la puissance d'émission des éléments d'émission de la branche est augmentée pendant une répétition consécutive des étapes Sa, Sb et Sc, de laquelle on a reçu au moins temporairement pendant la dernière exécution des étapes Sa et Sb moins de lumière que de l'autre branche, afin de compenser à nouveau la puissance de lumière reçue des deux branches (A, B),
**caractérisé en ce que**
le dispositif d'analyse (11) est conçu également pour déclencher une fonction de commutation dans le cas où ledit signal différentiel (A-B) présente au moins un marquage caractéristique de signal différentiel sous la forme d'un nombre prédéfini de valeurs extrêmes consécutives à l'intérieur d'une fenêtre de temps d'observation (T_{B}) prédéfinie et lorsque le signal de réglage (R) présente au moins approximativement la même valeur de montant essentiellement au début et à la fin de la fenêtre de temps d'observation (T_{B}).

10. Dispositif capteur selon la revendication 9, **caractérisé en ce que** le dispositif d'analyse est conçu également pour l'application des procédés selon l'une quelconque des revendications 2 à 7.
